# FASCICULE DE BREVET EUROPEEN

(11) **EP 2 258 955 B1**
(45) Date de publication et mention de la délivrance du brevet: **26.08.2015**
(21) Numéro de dépôt: 10164632.1
(22) Date de dépôt: 01.06.2010
(51) Int. Cl.: F16B 37/04

(54) **Dispositif de pince à écrou, susceptible d'être placé sur le bord d'un support tel qu'un panneau**
Mutternklemmvorrichtung, geeignet zur Positionierung am Rand einer Unterlage wie etwa einer Platte
Nut clamping device, suitable for placement on a support such as a plate

(30) Priorité: 02.06.2009 FR 0953621
(43) Date de publication de la demande: 08.12.2010
(73) Titulaire: LISI Automotive Rapid, 95650 Puiseux-Pontoise (FR)
(72) Inventeur: Leon, Jean-Pierre, 78800, HOUILLES (FR); Perol, Rodolphe, 75015 PARIS (FR); Dufresne, Alexandre, 95870 BEZONS (FR)
(74) Mandataire: Berger, Helmut

(56) Documents cités:
- EP-A1- 0 407 282
- WO-A1-97/47892
- US-A- 3 145 753

## Description

L'invention concerne un dispositif de pince à écrou, susceptible d'être placé sur le bord d'un support tel qu'un panneau, du type comprenant une pièce formée par une pince, présentant la forme générale d'un U, dont les branches sont traversées par des évidements axialement alignés et une pièce d'insert en forme d'une plaquette pourvue d'un fût taraudé faisant saillie d'une face de la plaquette et destinée à être insérée entre les deux branches en regard de la pièce de pince de façon que le fût soit engagé dans un évidement de pince et le bord du panneau soit engagé entre la face de la plaquette opposée au fût et la branche de la pince, qui est située en regard de cette face.

Le document EP 0 407 282 A décrit un dispositif de pince à écrou selon le préambule de la revendication 1.

Les dispositifs de ce type, qui sont connus, présentent l'inconvénient majeur que leur mise en place sur le bord du support ne se fait pas toujours aisément par un simple geste de glissement de l'écrou sur ce bord mais nécessite en plus un geste d'écartement de l'extrémité avant de la plaque d'insert, de la branche correspondante de la pince pour que l'ouverture d'introduction soit suffisamment large.

L'invention a pour but de pallier cet inconvénient.

Pour atteindre ce but, le dispositif de pince selon l'invention comprend les caractéristiques de la revendication 1.

Selon une caractéristique de l'invention, le dispositif est caractérisé en ce que les moyens de maintien sont adaptés pour produire un couple ayant tendance à appliquer l'extrémité avant de la plaquette contre l'extrémité avant de la branche, tout en maintenant l'extrémité arrière de la plaquette au moins à proximité de l'arrière de la branche inférieure.

Selon une autre caractéristique de l'invention, le dispositif est caractérisé en ce que les moyens de maintien comportent des éléments élastiquement déformables dont une extrémité est solidaire de la branche supérieure de la partie de pince et dont l'autre extrémité libre prend appui sur la partie arrière de la plaquette et des moyens associés à la branche inférieure, également élastiquement déformables, et qui viennent en appui contre la face inférieure de la plaquette à un endroit situé entre l'extrémité arrière sur laquelle prennent appui lesdits éléments et l'extrémité avant de la plaquette.

Selon encore une autre caractéristique de l'invention, le dispositif est caractérisé en ce que les moyens associés à la branche inférieure sont réalisés sous forme d'une patte dont une extrémité est solidaire de la branche inférieure et dont l'autre extrémité libre est en appui contre la face inférieure de la plaquette.

Selon encore une autre caractéristique de l'invention, le dispositif est caractérisé en ce que la patte est découpée dans la branche inférieure et est recourbée hors du plan de cette branche en direction de la branche supérieure en s'écartant progressivement de la branche inférieure en direction de la partie de base de la partie de pince.

Selon encore une autre caractéristique de l'invention, le dispositif est caractérisé en ce que l'évidement de passage de vis de la branche inférieure de la partie de pince est pratiqué dans la patte.

Selon encore une autre caractéristique de l'invention, le dispositif est caractérisé en ce que les éléments d'appui sur la face supérieure de l'extrémité arrière de la plaquette sont formés par des pattes découpées dans la branche supérieure de la partie de pince et qui s'étendent obliquement vers la plaquette à partir d'un endroit relativement proche de l'extrémité avant libre de cette branche.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant un mode de réalisation de l'invention et dans lesquels :
- les figures 1 à 3 sont différentes vues en perspective d'un dispositif de pince à écrou selon l'invention et,
- la figure 4 est une vue latérale du dispositif de pince à écrou selon les figures 1 à 3,
- la figure 5 est une vue similaire à la figure 4, mais montre le dispositif à l'état monté sur le bord d'un panneau.

L'invention concerne une pince à écrou 1, qui est destinée à être montée sur le bord d'un support tel qu'un panneau 4 ou analogue.

Le dispositif selon l'invention comporte deux pièces, une première pièce 2 servant de pince et réalisée avantageusement en métal et une seconde pièce métallique d'insert 3 qui sert d'écrou et est assemblée à la pièce de pince 2 en étant insérée dans celle-ci.

La pièce de pince 2 présente la forme générale d'un U à deux branches 5 et 6 reliée par une partie de base 7. Les deux branches 5 et 6 sont pourvues d'évidements traversant respectivement 8 et 9. Ces évidements permettent le passage d'une vis qui traverse également un orifice approprié pratiqué dans le panneau 4, lorsque le dispositif est monté sur le bord de celui-ci.

La pièce 3 servant d'écrou comporte une partie de plaquette 11 et un fût taraudé 12 qui s'étend perpendiculairement la face supérieure 13 de la plaquette.

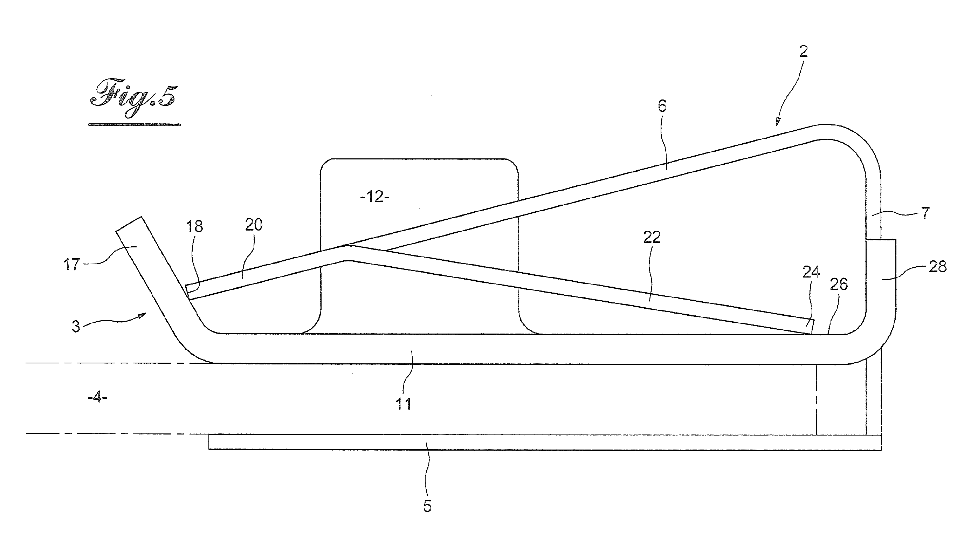

Comme le montrent les figures, la pièce servant d'écrou 3 est insérée entre les deux branches 5 et 6 de la pièce de pince 2 de façon que le fût 12 s'engage dans l'évidement 9 de la branche supérieure 5 en la traversant partiellement, la face 14 de la plaquette 11, qui est opposée au fût 12 étant en regard de la face interne 15 de la branche inférieure 5 pourvue de l'évidement 8. Comme le montre la figure 5, lorsque le dispositif de pince à écrou 1 est engagé sur le bord d'un panneau 4, ce bord est inséré entre la face 15 de la branche inférieure 5 et la face 14 de la plaquette 11 de l'insert écrou 3.

Pour faciliter le montage du dispositif 1 sur le bord du panneau 4, l'extrémité avant 17 de la plaquette est recourbée vers le haut en s'éloignant de l'extrémité de la branche inférieure 5, pour venir en butée contre l'extrémité avant 18 de la branche supérieure, de façon à former un becquet d'entrée pour l'engagement du bord du panneau 4, qui se rétrécit dans la direction de l'engagement entre les branches inférieures 6 de la pince et la plaquette 11 de l'insert écrou 3.

L'évidement 9 de la branche supérieure 6 s'étend à partir de l'extrémité 18 en direction de la branche de base 7 pour permettre le passage du fût 12 en créant ainsi deux pattes 20 situées de part et d'autre du fût 12. Les extrémités libres des pattes forment l'extrémité libre 18 de la branche supérieure 6 contre laquelle la partie recourbée de becquet 17 de la plaque 11 vient en appui. A partir de chaque patte 20 s'étend obliquement en direction de la branche inférieure 5 une lame 22. Les lames 22 sont découpées dans les bords latéraux de la branche 6 à partir de la partie de base 7 jusqu'à l'endroit 23 situé, dans l'exemple représenté, à peu près au milieu des pattes 20. C'est donc à cet endroit 23 que chaque lame prend naissance. L'extrémité libre 24 de chaque lame prend appui sur un bord latéral 26 de l'extrémité arrière 27 de la plaquette 11, qui se prolonge au niveau de ce bord 26 par une partie 28 recourbée vers le haut. Ces parties 28 sont situées de part et d'autre de la base 7 de la partie de pince 2. Les lames 22 en venant en appui par leurs extrémités libres 24 sur les bords latéraux 26 de la plaquette 11, repoussent le bord arrière 27 de cette plaquette vers l'extrémité arrière de la branche inférieure 5. Elles constituent des moyens de rappel lorsque le dispositif de pince à écrou est monté sur le bord d'un panneau 4, comme le montre la figure 5.

La branche inférieure 5 de la pince 2 comporte une patte 30 qui est découpée dans celle-ci et s'étend à partir d'un endroit 31 à proximité de l'extrémité avant 32 de cette branche en direction de l'extrémité arrière de celle-ci. L'évidement 8 de passage des vis est réalisé dans cette patte 30. Cette patte est recourbée hors de la face de la branche 5 de façon à être inclinée en direction de la branche supérieure 6.

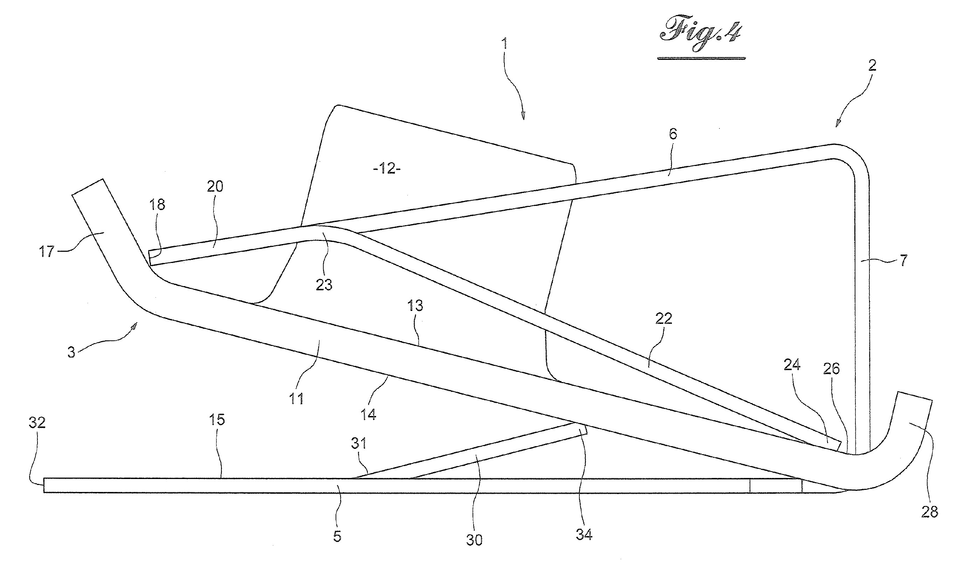

Comme le montre notamment la figure 4, l'extrémité libre 34 de la patte 30 vient en appui sous la face inférieure 14 de la plaquette 11 de façon à appliquer à celle-ci un couple par rapport aux extrémités libres 24 des lames 22 en appui sur les bords supérieurs 26 à l'arrière de la plaquette, qui a tendance à faire pivoter l'extrémité avant de becquet 17 de la plaquette vers le haut de façon que cette extrémité soit appliquée contre l'extrémité libre avant 18 de la branche supérieure 6 de la pince 2, c'est-à-dire contre les extrémités libres des pattes 20.

Ainsi les lames 22 et la patte 30 assurent le maintien de la plaquette 11 dans une position dans laquelle la partie de becquet 17 est écartée de la branche inférieure 5 de la pince 2 et maintenue dans une position dans laquelle la pince est toujours et suffisamment ouverte pour permettre l'engagement facile et sûr de la pince sur le bord d'un panneau. Les lames 22 et la patte 30 étant élastiquement déformables, elles sont élastiquement repoussées de leur position de repos représentées à la figure 4 lors de l'engagement de la pince sur le panneau, dans leur position montrée à la figure 5, la patte 30 étant alors forcée à revenir dans sa position dans le plan de la branche 5 de la pince.

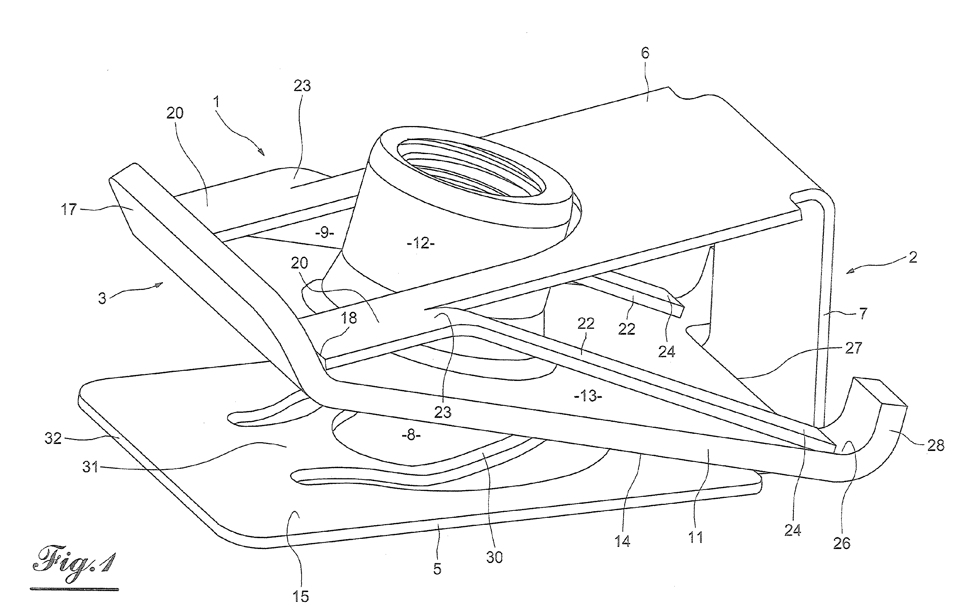

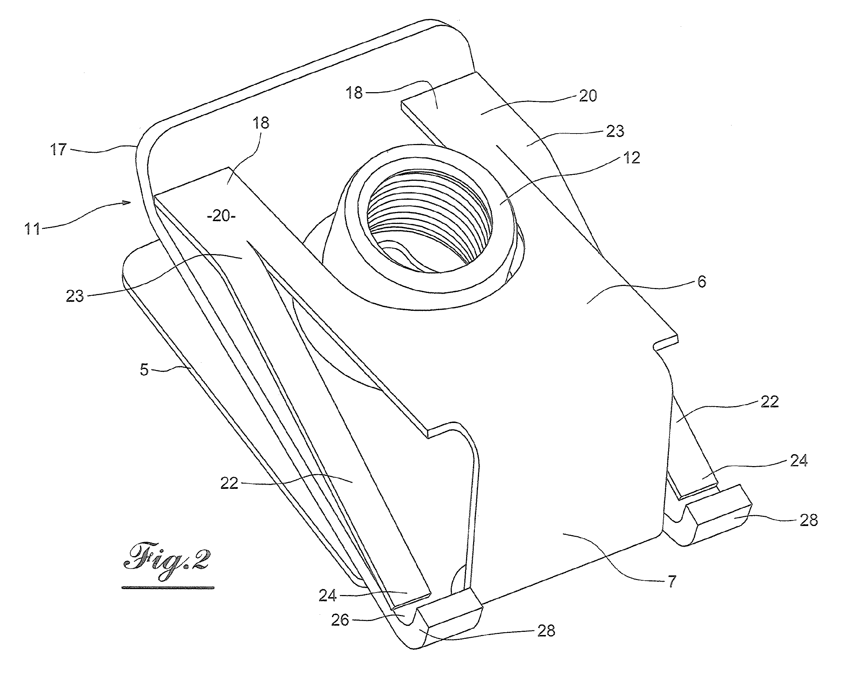

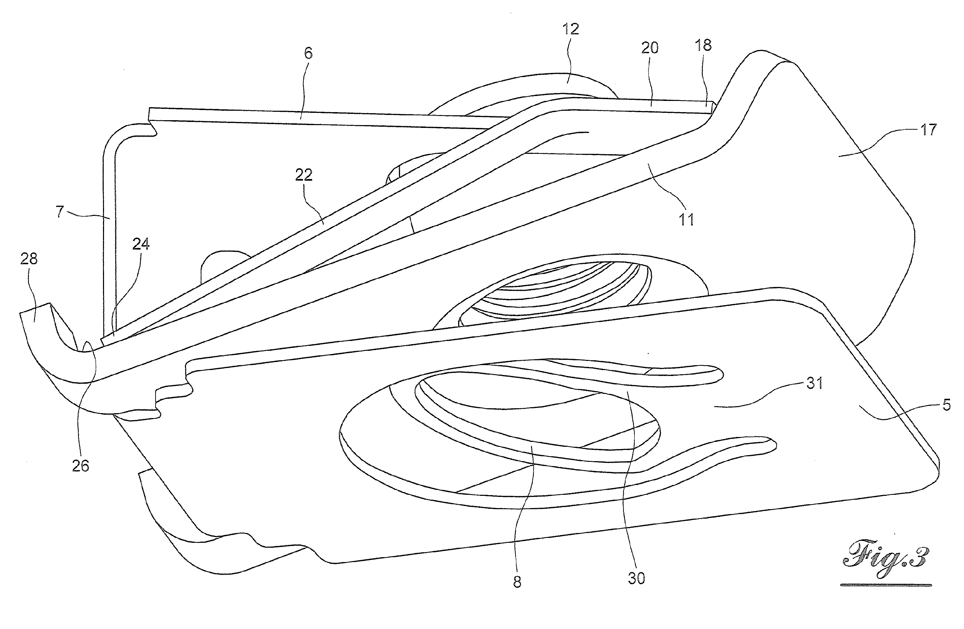

Le fonctionnement du dispositif de pince selon l'invention ressort déjà de la description qui vient d'être faite et des figures. A l'état de repos, la pince se trouve dans la position représentée aux figures 1 à 4. La patte 30 et les lames 22 maintiennent la plaquette 11 dans une position d'ouverture de la pince dans laquelle l'extrémité arrière de la plaquette d'insert est maintenue par les lames 22 au moins près de l'arrière de la branche inférieure et l'extrémité avant de becquet 17 est en appui contre l'extrémité avant libre 18 de la branche supérieure. Il est ainsi possible d'engager la pince sur le bord d'un panneau, en un seul geste. Lorsque le dispositif de pince est engagé sur le bord, les lames 22 et la patte 30 sont élastiquement déformées si bien qu'après le dégagement du panneau, ces éléments forcent la plaquette à revenir dans sa position selon les figures 1 à 4 pour être prête par un nouvel engagement sur un panneau.

De multiples modifications peuvent être apportées au dispositif selon l'invention telle qu'elle est représentée sur les figures, à titre d'exemple. Les lames 22 et la patte 30 peuvent être réalisées autrement, à condition qu'elles conservent leur fonction décrite ci-avant. Bien entendu, les parties de pince et d'insert peuvent être réalisées en toute autre matière appropriée.

## Revendications

1. Dispositif de pince à écrou, susceptible d'être placé sur le bord d'un support tel qu'un panneau, du type comprenant une pièce (2) formée par une pince présentant la forme générale d'un U, dont les branches (5, 6) sont traversées par des évidements (8, 9) de passage d'une vis, axialement alignés, et une pièce d'insert (3) en forme d'une plaquette (11) pourvue d'un fût taraudé (12) faisant saillie d'une face de la plaquette (11) et destiné à être inséré entre les deux branches (5, 6) de la pièce de pince de façon que le fût (12) soit engagé dans un évidement (9) de pince et le bord du panneau (4) soit engagé entre la face (14) de la plaquette (11) opposée au fût (12) et la branche (5) de la pince (2), qui est située en regard de cette face, **caractérisé en ce qu'**il comporte des moyens (22, 30) de maintien de l'extrémité avant (17) de la plaquette (11) contre l'extrémité avant libre (18) de l'autre branche (6) de la pince, dans une position dans laquelle l'extrémité avant (17) est écartée de la branche (5) de la pince pour que cette pince soit maintenue dans une position d'ouverture permettant l'engagement de la pince sur le bord d'un panneau.

2. Dispositif selon la revendication 1, **caractérisé en ce que** les moyens (22, 30) de maintien sont adaptés pour produire un couple ayant tendance à appliquer l'extrémité avant (17) de la plaquette (11) contre l'extrémité avant (18) de la branche (6), tout en maintenant l'extrémité arrière (24) de la plaquette au moins à proximité de l'arrière de la branche inférieure (5).

3. Dispositif selon la revendication 2, **caractérisé en ce que** les moyens de maintien comportent des éléments élastiquement déformables (22) dont une extrémité est solidaire de la branche supérieure (6) de la partie de pince (2) et dont l'autre extrémité libre (24) prend appui sur la partie arrière (26) de la plaquette (11) et des moyens (30) associés à la branche inférieure (5), également élastiquement déformables, et qui viennent en appui contre la face inférieure (14) de la plaquette à un endroit situé entre l'extrémité arrière (26) sur laquelle prennent appui lesdits éléments (22) et l'extrémité avant (17) de la plaquette.

4. Dispositif selon la revendication 3, **caractérisé en ce que** les moyens (30) associés à la branche inférieure (5) sont réalisés sous forme d'une patte dont une extrémité est solidaire de la branche inférieure (5) et dont l'autre extrémité libre (34) est en appui contre la face inférieure (14) de la plaquette (11).

5. Dispositif selon la revendication 4, **caractérisé en ce que** la patte (30) est découpée dans la branche inférieure (5) et est recourbée hors du plan de cette branche en direction de la branche supérieure (6) en s'écartant progressivement de la branche inférieure (5) en direction de la partie de base (7) de la partie de pince (2).

6. Dispositif selon la revendication 5, **caractérisé en ce que** l'évidement (8) de passage de vis de la branche inférieure (5) de la partie de pince (2) est pratiqué dans la patte (30).

7. Dispositif selon l'une des revendications 2 à 6, **caractérisé en ce que** les éléments (22) d'appui sur la face supérieure de l'extrémité arrière (26) de la plaquette (11) sont formés par des pattes découpées dans la branche supérieure (6) de la partie de pince (2) et qui s'étendent obliquement vers la plaquette à partir d'un endroit relativement proche de l'extrémité avant libre (18) de cette branche (6).

## Patentansprüche

1. Mutternklemmvorrichtung, die am Rand einer Unterlage wie einer Platte platzierbar ist, der Bauart, die ein Teil (2) umfasst, das von einer Klemme gebildet ist, die eine allgemeine U-Form aufweist, deren Schenkel (5, 6) von axial fluchtenden Aussparungen (8, 9) für den Durchgang einer Schraube durchquert sind, und ein Einsatzteil (3) in Form eines Plättchens (11) mit einem Gewindeschaft (12), der aus einer Seite des Plättchens (11) hervorsteht und zum Einsetzen zwischen den zwei Schenkeln (5, 6) des Klemmenteils derart bestimmt ist, dass der Schaft (12) in einer Aussparung (9) der Klemme aufgenommen ist und der Rand der Platte (4) zwischen der dem Schacht (12) gegenüberliegenden Seite (14) des Plättchens (11) und dem Schenkel (5) der Klemme (2), der dieser Seite gegenüberliegt, aufgenommen ist, **dadurch gekennzeichnet, dass** sie Haltemittel (22, 30) des vorderen Endes (17) des Plättchens (11) am vorderen freien Ende (18) des anderen Schenkels (6) der Klemme in einer Position aufweist, in der das vordere Ende (17) vom Schenkel (5) der Klemme beabstandet ist, damit diese Klemme in einer geöffneten Position gehalten wird, die den Eingriff der Klemme auf dem Rand einer Platte erlaubt.

2. Vorrichtung nach Anspruch 1, **dadurch gekennzeichnet, dass** die Haltemittel (22, 30) ausgebildet sind, um ein Moment zu produzieren, das dazu tendiert, das vordere Ende (17) des Plättchens (11) gegen das vordere Ende (18) des Schenkels (6) zu drücken, wobei das hintere Ende (24) des Plättchens mindestens in der Nähe des hinteren Teils des unteren Schenkels (5) gehalten wird.

3. Vorrichtung nach Anspruch 2, **dadurch gekennzeichnet, dass** die Haltemittel elastisch verformbare Elemente (22) aufweisen, von denen ein Ende mit dem oberen Schenkel (6) des Klemmenteils (2) fest verbunden ist und von denen sich das andere freie Ende (24) auf dem hinteren Teil (26) des Plättchens (11) abstützt, und dem unteren Schenkel (5) zugeordnete, ebenfalls elastisch verformbare Mittel (30), die sich auf der unteren Seite (14) des Plättchens an einer Stelle abstützen, die sich zwischen dem hinteren Ende (26), auf dem sich die Elemente (22) abstützen, und dem vorderen Ende (17) des Plättchens befinden.

4. Vorrichtung nach Anspruch 3, **dadurch gekennzeichnet, dass** die dem unteren Schenkel (5) zugeordneten Mittel (30) in Form einer Lasche ausgebildet sind, von der ein Ende mit dem unteren Schenkel (5) fest verbunden ist und deren anderes freies Ende (34) sich auf der unteren Seite (14) des Plättchens (11) abstützt.

5. Vorrichtung nach Anspruch 4, **dadurch gekennzeichnet, dass** die Lasche (30) aus dem unteren Schenkel (5) ausgeschnitten ist und aus der Ebene dieses Schenkels in Richtung des oberen Schenkels (6) gebogen ist und sich dabei zunehmend vom unteren Schenkel (5) in Richtung des Basisteils (7) des Klemmenteils (2) beabstandet.

6. Vorrichtung nach Anspruch 5, **dadurch gekennzeichnet, dass** die Aussparung (8) für den Durchgang der Schraube des unteren Schenkels (5) des Klemmenteils (2) in der Lasche (30) ausgebildet ist.

7. Vorrichtung nach einem der Ansprüche 2 bis 6, **dadurch gekennzeichnet, dass** die Stützelemente (22) auf der oberen Seite des hinteren Endes (26) des Plättchens (11) von aus dem oberen Schenkel (6) des Klemmenteils (2) ausgeschnittenen Laschen gebildet sind, die sich ab einer Stelle in relativer Nähe des freien vorderen Endes (18) dieses Schenkels (6) schräg in Richtung des Plättchens erstrecken.

## Claims

1. A nut clamping device, suitable for placement on the edge of a support such as a panel, of the type comprising a part (2) formed by a clamp that is generally U-shaped, whereof the branches (5, 6) are crossed through by recesses (8, 9) for the passage of the screw, axially aligned, and an insert part (3) in the form of a plate (11) provided with a tapped drum (12) protruding from one face of the plate (11) and designed to be inserted between the two branches (5, 6) of the clamp part such that the drum (12) is engaged in a clamp recess (9) and the edge of the panel (4) is engaged between the face (14) of the plate (11) opposite the barrel (12) and the branch (5) of the clamp (2), which is situated across from that face, **characterized in that** it includes means (22, 30) for keeping the front end (17) of the plate (11) against the free front end (18) of the other branch (6) of the clamp, in a position in which the front end (17) is separated from the branch (5) of the clamp so that that clamp is kept in an open position allowing the engagement of the clamp on the edge of a panel.

2. The device according to claim 1, **characterized in that** the maintaining means (22, 30) are suitable for producing a torque tending to press the front end (17) of the plate (11) against the front end (18) of the branch (6), while keeping the rear end (24) of the plate at least near the back of the lower branch (5).

3. The device according to claim 2, **characterized in that** the maintaining means include elastically deformable elements (22) whereof one end is secured to the upper branch (6) of the clamp part (2) and the other free end (24) bears on the rear portion (26) of the plate (11) and means (30) associated with the lower branch (5), also elastically deformable, and which bear against the lower face (14) of the plate in a location situated between the rear end (26) on which said elements (22) bear and the front end (17) of the plate.

4. The device according to claim 3, **characterized in that** the means (30) associated with the lower branch (5) are made in the form of a tab whereof one end is secured to the lower branch (5) and the other end (34) bears against the lower face (14) of the plate (11).

5. The device according to claim 4, **characterized in that** the tab (30) is cut in the lower branch (5) and is curved outside the plane of that branch toward the upper branch (6) while moving gradually away from the lower branch (5) toward the base portion (7) of the clamp portion (2).

6. The device according to claim 5, **characterized in that** the recess (8) for the passage of screws of the lower branch (5) of the clamp portion (2) is formed in the tab (30).

7. The device according to one of claims 2 to 6, **characterized in that** the elements (22) bearing on the upper face of the rear end (26) of the plate (11) are formed by tabs cut into the upper branch (6) of the clamp portion (2) and which extend obliquely toward the plate from a location relatively close to the free front end (18) of that branch (6).
